# EUROPÄISCHE PATENTSCHRIFT

(11) **EP 1 102 376 B1**
(45) Veröffentlichungstag und Bekanntmachung des Hinweises auf die Patenterteilung: **23.07.2003**
(21) Anmeldenummer: 00124600.8
(22) Anmeldetag: 10.11.2000
(51) Int. Cl.: H02G 3/06, H02G 3/04

(54) **Kabelkanal**
Cable duct
Goulotte de câbles

(30) Priorität: 19.11.1999 DE 29920303 U; 31.05.2000 DE 20009805 U
(43) Veröffentlichungstag der Anmeldung: 23.05.2001
(73) Patentinhaber: Tehalit GmbH & Co. KG, 67716 Heltersberg (DE)
(72) Erfinder: Ruf, Peter, 67714 Waldfischbach (DE); Malschofsky, Ralf, Dipl.- Ing., 67273 Weisenheim am Berg (DE)
(74) Vertreter: Patentanwälte Möll und Bitterich

(56) Entgegenhaltungen:
- EP-A- 0 772 271
- EP-A- 0 874 435
- DE-A- 2 002 912
- DE-A- 2 017 232
- FR-A- 2 680 206

## Beschreibung

Die Erfindung betrifft Leitungsführungs-, Geräteeinbau- und Verdrahtungskanäle, hergestellt aus Einzelelementen gemäß dem Oberbegriff des Anspruchs 1.

Kabelkanäle werden seit vielen Jahrzehnten weltweit in großen Stückzahlen hergestellt, montiert und benutzt Sie bestehen im wesentlichen aus einem Unterteil mit U- bzw. C-förmigem Querschnitt und wenigstens einem aufrastbaren Deckel.

Handelsübliche Kabelkanäle sind entweder aus Stahlblech gefaltet, aus Aluminium stranggepresst oder aus Kunststoff extrudiert. Diese Herstellungstechniken ermöglichen die rationelle Herstellung der von den Kunden benötigten großen Mengen an Leitungsführungskanälen und haben sich daher allgemein durchgesetzt.

Für die Herstellung von Kabelkanälen werden duroplastische und thermoplastische Kunststoffe eingesetzt. Bei den duroplastischen Kunststoffen handelt es sich überwiegend um faserverstärkte Kunststoff. Bei den thermoplastischen Kunststoffen handelt es sich überwiegend um Polyvinylchlorid (PVC), Acrylnytril-Butadien-Styrol (ABS), Polycarbonat (PC), Polystyrol (PS), Polyphenylenoxid (PPO) und deren Mischungen.

Bei der Extrusion von Kabelkanälen aus Kunststoff entsteht ein endloser Profilstrang. Dieser wird in Einzelelemente von z. B. 2 m Länge geschnitten. Die Einzelelemente werden verpackt, gelagert und transportiert Auf der Baustelle werden sie vom Elektroinstallateur hintereinander montiert. Gegebenenfalls wird durch geeignete Kupplungsvorrichtungen sichergestellt, dass die Einzelelemente an den Stoßstellen fluchten.

Beim Extrudieren der Kanäle können verfahrensbedingt nur Längsprofile erzeugt werden. Sehr oft besteht jedoch die Notwendigkeit nach Profilen, die sich quer zur Extrusionsrichtung erstrecken. Diese müssen durch nachträgliche Bearbeitung der extrudierten Kanalprofile erzeugt werden, entweder durch Ausstanzen, Ausschneiden, durch Einkleben, einklemmen usw. Dies ist mit einem nicht unerheblichen Zusatzaufwand verbunden und daher unbefriedigend.

Aus der EP 0 772 271 A ist ein aus thermoplastischem Kunststoff im Spritzgussverfahren hergestellter Kabelkanal bekannt. Der Kunststoff wird in der Spritzgussform geschäumt, indem Stickstoffgas injiziert wird.

Thermoplastische Kunststoffe haben als wesentlichen Vorteil ihre leichte Formbarkeit und Verarbeitbarkeit, sei es durch Extrusion, sei es durch Spritzgießen. Nachteilig ist, dass sie beim Erwärmen im Betrieb ihre Festigkeit verlieren. Aus diesem Grund werden hoch belastete Kabelkanäle aus duroplastischen Kunststoffen hergestellt. Deren Verarbeitung ist jedoch zeit- und kostenaufwändig. Das ist unbefriedigend.

Der vorliegenden Erfindung liegt daher die Aufgabe zugrunde, einen Kabelkanal der eingangs genannten Art anzugeben, der aus duroplastischem Kunststoff besteht und sich trotzdem einfach, schnell und preiswert herstellen lässt.

Diese Aufgabe wird gelöst durch einen Kabelkanal mit den Merkmalen des Anspruchs 1.

Die vorliegende Erfindung verzichtet auf die Herstellung der Kanal-Einzelelemente im Extrusionsverfahren und verwendet statt dessen das RIM-Verfahren (Reaction-Injection-Molding). Hierbei fallen die Kanal-Einzelelemente gleich in der fertigen Länge an. Außerdem lassen sich fast beliebige Profile realisieren.

Mit der Möglichkeit, beliebige Profile zu realisieren, sind weitere handfeste Vorteile verbunden. Dank der Verstärkungsrippen an den Seitenwänden und am Boden, die quer zur Kanallängsrichtung orientiert sind, lassen sich die Wandstärken zwischen den Rippen deutlich reduzieren, so dass insgesamt eine Materialerspamis realisierbar ist. Dank der Rastzungen und -taschen, mit denen die Einzelelemente zusammengesteckt werden, ergibt sich nicht nur eine Beschleunigung und eine größere Exaktheit der Montage, sondern vor allem auch eine höhere Stabilität des fertigen Kanals, so dass die Abstände der Befestigungsschrauben erhöht werden können, was wiederum Montagekosten sparen hilft.

Gemäß einer Weiterbildung der Erfindung sind an den Enden der Einzelelemente Führungsleisten angeformt, die sich bevorzugt über einen Teil der Höhe der Seitenwände erstrecken. Diese Führungsleisten erleichtern die Montage der Einzelelemente, erhöhen die Festigkeit des Kanals im Stoßbereich und erhöhen die elektrische Sicherheit, indem sie etwaige Spalte zwischen den Einzelelementen abdecken.

In die Seitenwände können vorteilhafterweise Durchbrechungen oder Schlitze eingeformt sein. An diesen Stellen können elektrische Leitungen in den Kanal eingeführt bzw. aus ihm herausgeführt werden.

Um die elektrische Sicherheit zu erhöhen, können die Schlitze mit einer dünnen Haut aus Kunststoff verschlossen sein. Sobald ein Draht oder Kabel durch einen derart verschlossenen Schlitz geführt wird, reißt die Haut auf.

In den Boden der Einzelelemente sind vorteilhafterweise Löcher und Durchbrechungen eingeformt. Die Löcher können als Befestigungslöcher für eine Wandbefestigung herangezogen werden. Die Durchbrechungen erleichtern das Kanalgewicht und ermöglichen so eine Materialersparnis. Die notwendige Stabilität wird durch die Verstärkungs- und Versteifungsrippen gewährleistet

Gemäß einer Weiterbildung der Erfindung können an den Seitenwänden innen Halteleisten und/oder Haltenuten vorgesehen werden, vorzugsweise zum Einstecken von Quertrennwänden, mit deren Hilfe bestimmte Kanalbereiche abgeschottet werden können.

Vorteilhafterweise sind die Rastzungen und -taschen mit Sicherungseinrichtungen ausgerüstet, die ein ungewolltes Lösen der Einzelelemente verhindern.

Der Einfachheit halber bestehen die Sicherungseinrichtungen aus Schraublöchem, passend zu den handelsüblichen Befestigungsschrauben.

Gemäß einer Ausgestaltung der Erfindung können an den Seitenwände Halteprofile zum lösbaren Befestigen von Halteklammern vorgesehen sein. Halteklammem stabilisieren die offene Frontseite des Kanals, haben aber nur ein geringes Gewicht.

Falls der Wunsch besteht, elektrische Leitungen seitlich aus dem Kanal herauszuführen bzw. in den Kanal einzuführen, beispielsweise im Zusammenhang mit neben dem Kanal angebrachten Steckdosen usw., können in den Seitenwänden vorgeformte Ausbrechungen vorgesehen sein.

Dank des RIM-Verfahrens können in Boden und/oder Seitenwände Erhöhungen und/oder Vertiefungen eingeformt werden, vorzugsweise in Form von Buchstaben, Ziffern, Skalen und dergleichen.

Schließlich besteht die Möglichkeit, die Oberflächen der Einzelelemente wenigstens bereichsweise zu strukturieren.

Gemäß einer bevorzugten Ausgestaltung der Erfindung besteht der Kabelkanal aus Polyurethan. Polyurethan hat eine Vielzahl von vorteilhaften Eigenschaften, die jedoch bisher bei der Herstellung von Kabelkanälen überraschenderweise nicht beachtet wurden.

Ein erster Vorteil von Polyurethan besteht darin, dass die beiden miteinander reagierenden Ausgangsprodukte die Konsistenz von Wasser haben. Dadurch lassen sich in kürzester Zeit auch sehr große Spritzgussformen füllen. Dadurch können Kanalelemente hergestellt werden, die länger sind, als es bei der Verwendung von thermoplastischen Kunststoffen möglich wäre.

Ein weiterer Vorteil besteht darin, dass Polyurethan in praktisch jeder beliebigen Farbe einfärbbar ist. Damit können auch ästhetische Gesichtspunkte aller Art befriedigt werden.

Weitere Vorteile im Zusammenhang mit Leitungsführungskanälen sind die Chemikalien- und Wärmebeständigkeit von Polyurethan. Darüber hinaus ist Polyurethan auch ohne flammhemmende Zusätze schwer entflammbar. Sollte Polyurethan doch einmal brennen, so entstehen keine giftigen Chlorverbindungen.

Schließlich sollte als Vorteil noch erwähnt werden, dass Polyurethan in unterschiedlichen Härtegraden verarbeitet werden kann. Es besteht somit die Möglichkeit, Kanäle herzustellen, die sich an unregelmäßig gewölbte Untergründe anpassen können.

Anhand der Zeichnung soll die Erfindung in Form von Ausführungsbeispielen näher erläutert werden. Es zeigen
- Fig. 1: in Schrägansicht ein Ende eines ersten Einzelelementes zur Herstellung von Kabelkanälen,
- Fig. 2: in Schrägansicht einen aus zwei Einzelelementen zusammengesteckten Kabelkanal,
- Fig. 3: in Schrägansicht ein zweites Einzelelement zur Herstellung von Kabelkanälen und
- Fig. 4: eine Seitenansicht des Einzelelements der Fig. 3.

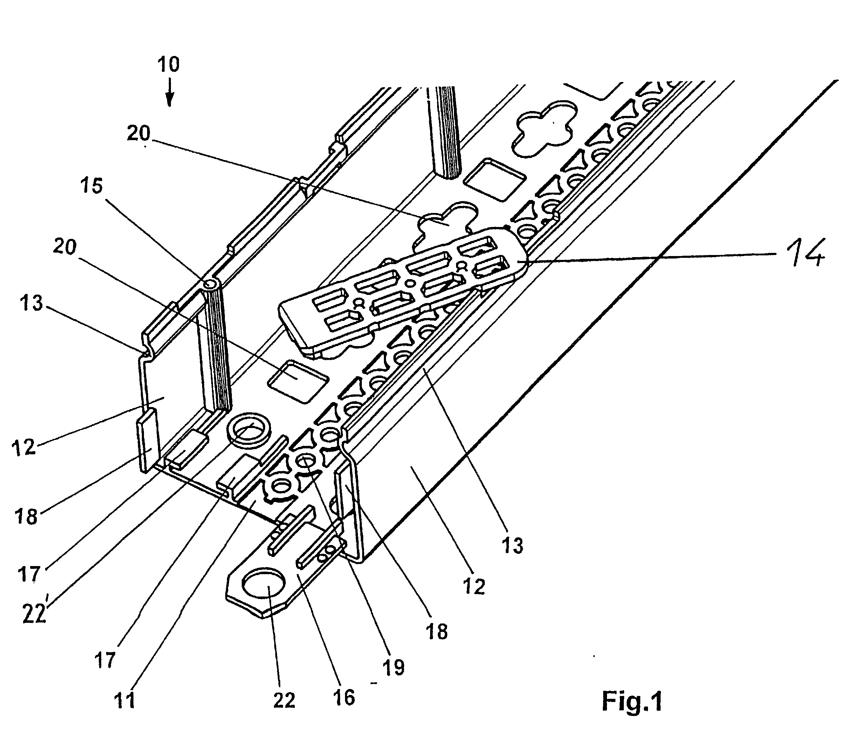

Fig. 1 zeigt ein Ende eines ersten Einzelelementes 10 zur Herstellung von Kabelkanälen. Man erkennt ein U-förmiges Unterteil, gebildet durch einen Boden 11, zwei Seitenwände 12 und je ein Deckelverschlussprofil 13 an den Seitenwänden 12. Innen an den Seitenwänden 12 sind Verstärkungsprofile 15 angeformt, die den Seitenwänden 12 eine erhöhte Stabilität verleihen, so dass die allgemeine Wandstärke der Seitenwände 12 klein bleiben kann. Öffnungen in den Verstärkungsprofilen 15 ermöglichen das Befestigen einer Klammer 14.

In den Boden 11 sind Befestigungslöcher 19 für Befestigungsschrauben eingeformt sowie Durchbrechungen 20, die der Verringerung des Kanalgewichtes und der Materialersparnis dienen. Falls eine höhere Bodenstabilität erwünscht ist, können auch am Boden 11 den Verstärkungsrippen 15 entsprechende Versteifungsrippen angeformt werden.

An jedem Ende des Einzelelementes 10 ist eine Rastzunge 16 angeformt, daneben eine korrespondierende Rasttasche 17. Die Rastzunge 16 wird in eine Rasttasche des benachbarten Einzelelementes eingeführt, die Rasttasche 17 nimmt eine Rastzunge des benachbarten Einzelelementes auf.

Um ein unbeabsichtigtes Lösen der Rastzungen 16 aus den Rasttaschen 17 zu verhindern, sind Sicherungseinrichtungen in Form von Befestigungslöchern 22, 22' vorgesehen. Eine in die Durchbrechungen 22, 22' eingedrehte Schraube verhindert das unbeabsichtigte Lösen der Steckverbindung.

An den Seitenwänden 12 erkennt man weiterhin Führungsleisten 18, die sich über einen Teil der Seitenwandhöhe erstrecken. Die Führungsleisten 18 sorgen für eine einwandfreie Fluchtung der benachbarten Einzelelemente 10 und überdecken etwaige Restspalte.

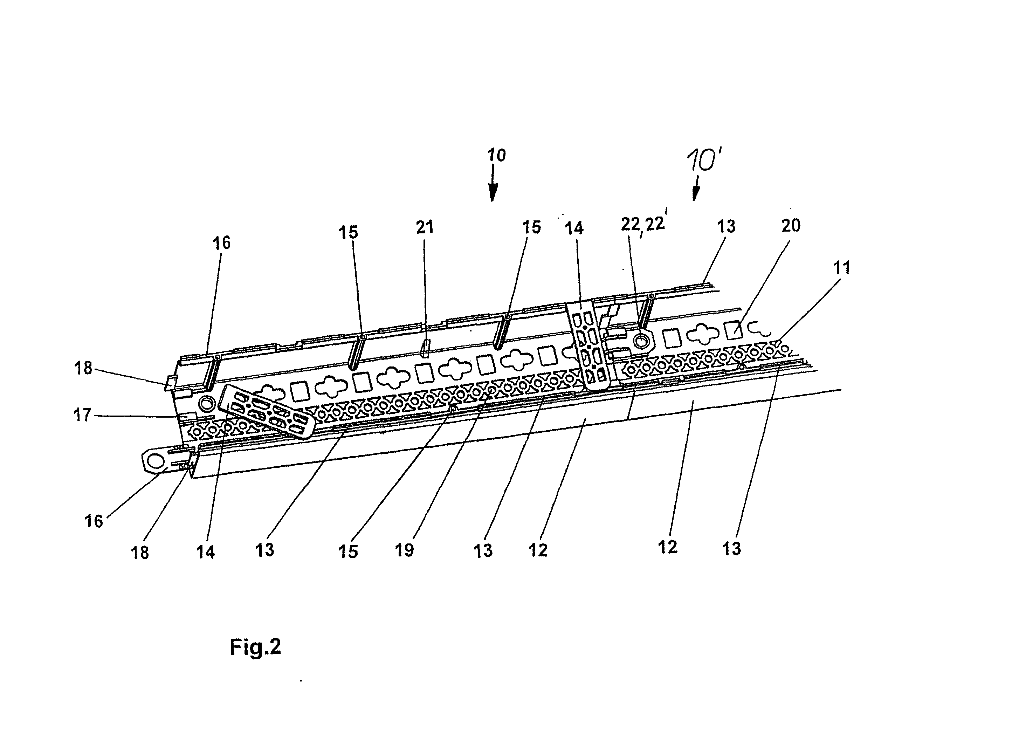

Fig. 2 zeigt einen aus zwei Einzelelementen 10, 10' zusammengesteckten Kabelkanal. Auf den Verstärkungsprofilen 15 sind gegenseitig beabstandet Halteklammern 14 aufgesteckt, die die offene Vorderseite der Einzelelemente 10, 10' lösbar verschließen.

Innen an den Seitenwänden 12 des Einzelelementes 10 sind Halteleisten 21 angeformt, in die z.B. Quertrennwände (nicht dargestellt) eingesteckt werden können.

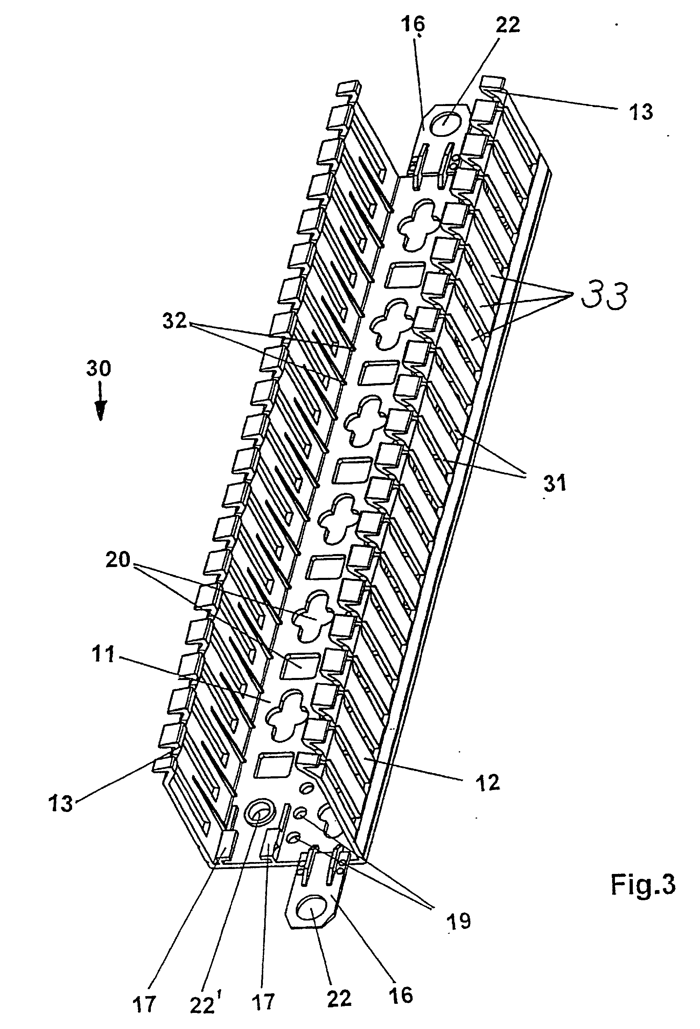

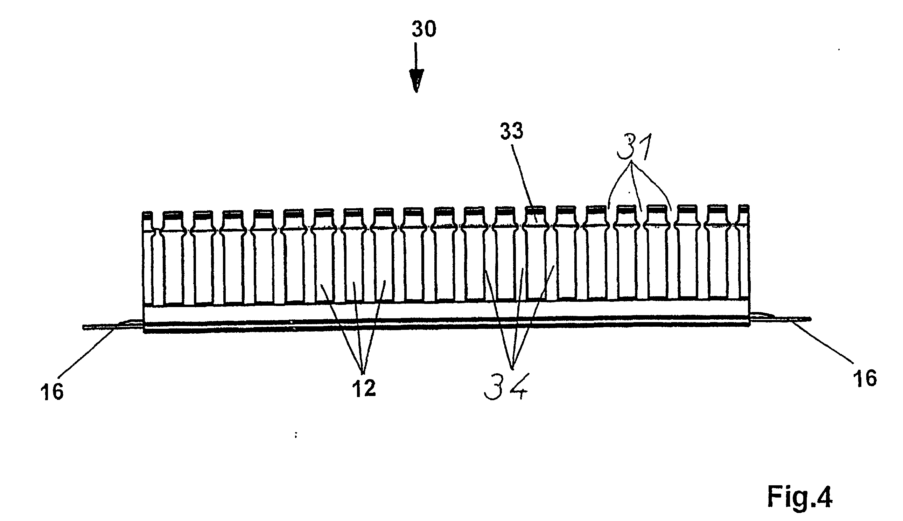

Fig. 3 zeigt ein zweites Einzelelement 30 zur Herstellung von sogenannten Verdrahtungskanälen. Man erkennt ebenfalls ein U-förmiges Unterteil, gebildet durch einen Boden 11, zwei Seitenwände 12 und je ein Deckelverschlussprofil 33 an den Seitenwänden 12. Wie insbesondere Fig. 4 erkennen lässt, sind in die Seitenwände 12 regelmäßig beabstandete Schlitze 31 eingearbeitet. Dank dieser Schlitze können elektrische Leitungen in das Einzelelement 30 eingeführt bzw. aus diesem herausgeführt werden.

Verstärkungsrippen 32 auf der Innenseite der Seitenwände 12 gewährleisten die erforderliche Stabilität der Seitenwandstege 33 zwischen den Schlitzen 31.

In Fig. 4 sind die Schlitze 31 bis zu einer gewissen Höhe durch eine dünne Kunststoffhaut 34 verschlossen. Dadurch wird die elektrische Sicherheit deutlich erhöht. Macht man diese Häute dünn genug, so reißen sie ohne weiteres ein, sobald elektrische Leitungen eingeführt bzw. herausgeführt werden.

## Patentansprüche

1. Kabelkanal, hergestellt aus Einzelelementen (10, 10', 30), jedes Einzelelement (10, 10', 30) im wesentlichen umfassend
- einen U- bzw. C-förmigen Querschnitt mit
- einem Boden (11),
- Seitenwänden (12),
- Deckelverschlussprofilen (13) an den Seitenwänden (12)
- und Einrichtungen (19) zum lösbaren Montieren der Einzelelemente (10, 10', 30) an Wänden oder Decken,
- an den Seitenwänden (12) sind senkrecht zum Boden (11) gerichtete Verstärkungsrippen (15, 32) angeformt,
- an den Enden der Einzelelemente (10, 10', 30) sind
- Rastzungen (16) und
- korrespondierende Rasttaschen (17) angeformt,
**gekennzeichnet durch** das Merkmal:
- er besteht aus Polyurethan, hergestellt im RIM-Verfahren.

2. Kabelkanal nach Anspruch 1, **gekennzeichnet durch** die Merkmale:
- an den Enden der Einzelelemente (10, 10') sind Führungsleisten (18) angeformt,
- die Führungsleisten (18) erstrecken sich über einen Teil der Höhe der Seitenwände (12).

3. Kabelkanal nach Anspruch 1 oder 2, **gekennzeichnet durch** das Merkmal:
- in die Seitenwände (12) sind Durchbrechungen oder Schlitze (31) eingeformt.

4. Kabelkanal nach Anspruch 3, **gekennzeichnet durch** das Merkmal:
- die Schlitze (31) sind mit einer dünnen Haut (34) aus Kunststoff verschlossen.

5. Kabelkanal nach einem der Ansprüche 1 bis 4, **gekennzeichnet durch** das Merkmal:
- in den Boden (11) sind Löcher (19) und Durchbrechungen (20) eingeformt.

6. Kabelkanal nach einem der Ansprüche 1 bis 5, **gekennzeichnet durch** das Merkmal:
- an den Seitenwänden (12) sind innen Halteleisten (21) und/oder Haltenuten zum Einstecken von Quertrennwänden angeformt.

7. Kabelkanal nach einem der Ansprüche 1 bis 6, **gekennzeichnet durch** das Merkmal:
- Rastzungen (16) und Rasttaschen (17) sind mit Sicherungseinrichtungen ausgerüstet.

8. Kabelkanal nach Anspruch 7, **gekennzeichnet durch** das Merkmal:
- die Sicherungseinrichtungen bestehen aus Schraublöchern (22, 22').

9. Kabelkanal nach einem der Ansprüche 1 bis 8, **gekennzeichnet durch** die Merkmale:
- an den Seitenwänden (12) sind Halteprofile (15) zum lösbaren Befestigen von Halteklammern (14) vorgesehen,
- die Halteklammern (14) verbinden die Seitenwände (12) lösbar miteinander.

10. Kabelkanal nach einem der Ansprüche 1 bis 9, **gekennzeichnet durch** das Merkmal:
- in Boden (11) und/oder Seitenwände (12) sind Erhöhungen und/oder Vertiefungen eingeformt in Form von Buchstaben, Ziffern, Skalen und dergleichen.

11. Kabelkanal nach einem der Ansprüche 1 bis 10, **gekennzeichnet durch** das Merkmal:
- die Oberflächen sind wenigstens bereichsweise strukturiert.

## Claims

1. Cable duct, produced from individual elements (10, 10', 30), each individual element (10, 10', 30) essentially comprising
- a U- or C-shaped cross section with
- a bottom (11)
- side walls (12),
- cover closure profiles (13) at the side walls (12)
- and devices (19) for mounting the individual elements (10, 10', 30) on walls or ceilings in a detachable manner,
- reinforcing ribs (15, 32), which are directed perpendicularly to the bottom (11), are formed onto the side walls (12),
- locking tongues (16) and
- corresponding locking pockets (17) are formed
- onto the ends of the individual elements (10, 10', 30),
**characterised by** the feature:
- it consists of polyurethane, produced in a RIM process.

2. Cable duct according to Claim 1, **characterised by** the features:
- guide strips (18) are formed onto the ends of the individual elements (10, 10'),
- the guide strips (18) extend over a part of the height of the side walls (12).

3. Cable duct according to Claim 1 or 2, **characterised by** the feature:
- apertures or slots (31) are formed into the side walls (12).

4. Cable duct according to Claim 3, **characterised by** the feature:
- the slots (31) are closed by a thin skin (34) of a plastics material.

5. Cable duct according to any one of Claims 1 to 4, **characterised by** the feature:
- holes (19) and apertures (20) are formed into the bottom (11).

6. Cable duct according to any one of Claims 1 to 5, **characterised by** the feature:
- retaining strips (21) and/or retaining grooves for inserting transverse partitions are formed onto and/or into the side walls (12) on the inside.

7. Cable duct according to any one of Claims 1 to 6, **characterised by** the feature:
- locking tongues (16) and locking pockets (17) are fitted with securing devices.

8. Cable duct according to Claim 7, **characterised by** the feature:
- the securing devices consist of screw holes (22, 22').

9. Cable duct according to any one of Claims 1 to 8, **characterised by** the features:
- retaining profiles (15) for fastening retaining clamps (14) in a detachable manner are provided on the side walls (12),
- the retaining clamps (14) connect the side walls (12) together in a detachable manner.

10. Cable duct according to any one of Claims 1 to 9, **characterised by** the feature:
- elevations and/or recesses are formed into the bottom (11) and/or side walls (12) in the form of letters, numerals, scales and similar.

11. Cable duct according to any one of Claims 1 to 10, **characterised by** the feature:
- the surfaces are structured at least in certain regions.

## Revendications

1. Goulotte de câbles fabriquée à partir d'éléments individuels (10, 10', 30), chacun des éléments individuels (10, 10', 30) comprenant essentiellement :
- une section transversale en U ou en C avec
- un fond (11),
- des parois latérales (12),
- des profilés de recouvrement (13) sur les parois latérales (12),
- et des dispositifs (19) pour monter de façon amovible les éléments individuels (10, 10', 30) sur des murs ou des plafonds,
- des nervures de renforcement (15, 32) orientées perpendiculairement au fond (11) étant ménagées sur les parois latérales (12),
- des languettes (16)
- et des encoches correspondantes (17) étant ménagées aux extrémités des éléments individuels (10, 10', 30), **caractérisée en ce qu'**elle est composée de polyuréthanne fabriqué par moulage réactif par injection.

2. Goulotte de câbles selon la revendication 1, **caractérisée en ce que** des languettes de guidage (18) sont ménagées aux extrémités des éléments individuels (10, 10', 30), et **en ce que** les languettes de guidage (18) s'étendent sur une partie de la hauteur des parois latérales (12).

3. Goulotte de câbles selon la revendication 1 ou 2, **caractérisée en ce que** des ouvertures ou des fentes (31) sont ménagées dans les parois latérales (12).

4. Goulotte de câbles selon la revendication 3, **caractérisée en ce que** les fentes (31) sont fermées par une fine pellicule (34) en matière plastique.

5. Goulotte de câbles selon l'une des revendications 1 à 4, **caractérisée en ce que** des trous (19) et des ouvertures (20) sont ménagés dans le fond (11).

6. Goulotte de câbles selon l'une des revendications 1 à 5, **caractérisée en ce que** sur la face intérieure des parois latérales (12) sont ménagées des languettes de maintien (21) et/ou des rainures de fixation pour y insérer des parois de séparation transversales.

7. Goulotte de câbles selon l'une des revendications 1 à 6, **caractérisée en ce que** les languettes (16) et les encoches (17) sont équipées de dispositifs de sécurité.

8. Goulotte de câbles selon la revendication 7, **caractérisée en ce que** les dispositifs de sécurité sont des trous de vissage (22, 22').

9. Goulotte de câbles selon l'une des revendications 1 à 8, **caractérisée en ce que** des profilés de maintien (15) sont prévus sur les parois latérales (12) pour y fixer de façon amovible des étriers de retenue (14), et **en ce que** les étriers de retenue (14) relient les parois latérales (12) entre elles de façon amovible.

10. Goulotte de câbles selon l'une des revendications 1 à 9, **caractérisée en ce que** des élévations et/ou des renfoncements ayant la forme de lettres, chiffres, graduations et analogues sont ménagés dans le fond (11) et/ou les parois latérales (12).

11. Goulotte de câbles selon l'une des revendications 1 à 10, **caractérisée en ce que** les surfaces sont au moins en partie structurées.
